# EUROPÄISCHE PATENTSCHRIFT

(11) **EP 1 841 336 B1**
(45) Veröffentlichungstag und Bekanntmachung des Hinweises auf die Patenterteilung: **28.12.2011**
(21) Anmeldenummer: 06706216.6
(22) Anmeldetag: 12.01.2006
(51) Int. Cl.: A24B 3/00, B65G 65/23, B65G 69/16

(54) **ENTLEERUNG VON TABAKBEHÄLTERN**
EMPTYING A TABACOO CONTAINER
VIDAGE DE CONTENANT DE TABAC

(30) Priorität: 28.01.2005 DE 102005004229
(43) Veröffentlichungstag der Anmeldung: 10.10.2007
(73) Patentinhaber: Hauni Primary GmbH, 21493 Schwarzenbek (DE)
(72) Erfinder: ULLNER, Tim, 21039 Hamburg (DE)
(74) Vertreter: Grebner, Christian Georg Rudolf
(86) Internationale Anmeldenummer: PCT/EP2006/000246
(87) Internationale Veröffentlichungsnummer: WO 2006/079454

(56) Entgegenhaltungen:
- DE-A1- 3 320 459
- GB-A- 2 227 727
- SE-C2- 524 025
- PATENT ABSTRACTS OF JAPAN Bd. 008, Nr. 087 (M-291), 20. April 1984 (1984-04-20) -& JP 59 004531 A (NIPPON SENBAI KOSHA), 11. Januar 1984 (1984-01-11)

## Beschreibung

Die Erfindung betrifft ein Verfahren zum Entleeren von einseitig offenen bzw. geöffneten, mit losem Tabakgut befüllten Behältern sowie eine Verwendung eines Roboters in der Tabak verarbeitenden Industrie.

In der Tabak verarbeitenden Industrie wird Tabakmaterial, z.B. Schnitttabak, Tabakfolie, Rohtabak, Tabakrippen, expandierter Tabak in Behältern gesammelt und zu Maschinen zur Weiterverarbeitung bzw. zur Tabakvorbereitung transportiert. Zur Weiterverarbeitung werden die Behälter mit dem Tabakmaterial um- oder ausgekippt.

Darüber hinaus werden in der Tabak verarbeitenden Industrie pneumatische Beschickungssysteme eingesetzt. Beispielsweise werden Zigarettenherstellungsmaschinen vollautomatisch von diesen Beschickern mit Schnitttabak versorgt. Hierbei werden geöffnete Behälter mit Schnitttabak einem Beschicker zugeführt und die Behälter angehoben und der Inhalt des Behälters wird in den Beschicker ausgekippt.

Dabei fallen die Tabakteilchen frei aus dem Behälter. Auf Grund der hohen Fallhöhe von 1 bis 2 Meter werden die Tabakteilchen stark mechanisch beansprucht. Außerdem wird Staub durch herabfallenden Tabak und der dadurch verdrängten Luft aufgewirbelt, der zu Verschmutzungen im Bereich des Kippers führt. Bislang wurde versucht, diesen Staub durch Abdichtungen im Behälter und in der Beschickereinrichtung zu halten. Ferner wird ein Teil des Tabaks durch den Fall so zerstört, sodass weiterer Staub hierdurch entsteht.

Unter der Bezeichnung "KAB" sind ein Beschicker und unter der Bezeichnung "KAG" ein so genannter Zusetzer der Hauni Maschinenbau AG bekannt. Die Tabakzufuhr erfolgt aus Kisten durch den Zusetzer.

Aus dem Gebrauchsmuster DE 298 19 731 U1 ist des Weiteren eine Vorrichtung zum Entladen offener Behälter mit unverdichteten oder lose verdichteten Tabakballen bekannt.

Außerdem ist in Patents Abstracts of Japan (Bd. 008, 087, 20.04.1984 sowie JP-A-59004531 das Einbringen von Tabakgut aus einem Behälter in einen Zwischenspeicher offenbart, wobei der Behälter mittels einer Hebebühne senkrecht angehoben wird und nach Erreichen einer vorbestimmten Höhe um eine Schwenkachse gekippt wird, so dass das Tabakgut aus dem Behälter in den Zwischenspeicher fällt. Zur vollständigen Entleerung wird der Behälter mittels Halteelementen gehalten, weiter senkrecht angehoben und um die Schwenkachse weitergeschwenkt.

Darüber hinaus beschreibt DE-A-33 20 459 eine Vorrichtung zum Entleeren von Tabakkartons, wobei ein geöffneter Tabakkarton von Klemmbacken erfasst und gehoben wird. Anschließend wird der Tabakkarton um 180° gedreht, so dass der Tabak unter einer Rüttelbewegung aus dem Karton herausgeschüttelt wird.

Überdies ist in SE-C-524 025 eine Dose für Schweden-Snus beschrieben.

Ausgehend von diesem Stand der Technik ist es Aufgabe der vorliegenden Erfindung, die Entleerung von Tabakgut aus einem Behälter der Tabak verarbeitenden Industrie zu verbessern.

Die Lösung der Aufgabe besteht bei einem Verfahren zum Entleeren von einseitig offenen oder geöffnet bereitgestellten, mit losem Tabakgut befüllten Behältern darin, dass der Behälter in einer ersten Position gegriffen und in eine Entleerungsposition über eine Abgabestelle, an der die offene Seite des Behälters im Wesentlichen nach oben weist, gebracht und anschließend der Behälter um eine Mittelachse gedreht wird, sodass wenigstens eine Kante der offenen Seite bodennah in einem Übergabebereich der Abgabestelle gebracht wird, wobei der Behälter während oder nach seiner Drehung um die Mittelachse quer zu einer vorbestimmten, ortfesten Ebene bewegt wird und der Behälter nach seiner Drehung um mehr als 90°, insbesondere mehr als 110°, angehoben und quer zur vorbestimmten, ortsfesten vertikalen Ebene derart bewegt wird, das der Abstand zwischen der Drehachse des Behälters und der vertikalen Ebene sich ändert und das lose Tabakgut während oder nach der Drehung aus dem Behälter herausrutscht.

Gemäß der Erfindung wird eine Kante der offenen Seite im bzw. am Bodenbereich der Abgabestelle angeordnet und der Behälter während der Drehung, insbesondere nichtgeradlinig oder translatorisch, derart bewegt, dass der Behälter zum Entleeren des Tabakguts und/oder die wenigstens eine Kante bodennah an der Abgabestelle positioniert werden oder sind.

Die Erfindung beruht auf dem Gedanken, dass nach und/oder neben einer Kipp- bzw. Drehbewegung des Behälters der Behälter translatorisch oder nichtgeradlinig, d.h. bahnförmig, bewegt wird, sodass eine harmonische Bewegung des Behälters entsteht, die frei im Raum ausgeführt wird. Durch die überlagerte Führung und Bewegung des Behälters mit seiner Dreh- bzw. Kippbewegung wird die Kante, über die die Entleerung des Behälters erfolgt, in die Nähe des Bodens der Ablagefläche bzw. Abgabestelle gebracht oder am Boden angeordnet, wobei der Behälter soweit abgesenkt wird, dass der Tabak nicht im freien Fall heraus fällt, sondern im Wesentlichen aus dem Behälter herausrutscht.

In Folge der rutschenden Entleerung des Behälters ist es nicht mehr notwendig, den Behälter bzw. den Abgabebereich abzudichten, da aufgrund der Rutschbewegung und Rollbewegung des losen Tabakguts die Staubentwicklung sehr gering ist. Außerdem werden die Tabakteilchen auf schonende Weise aus dem Behälter gegeben. Im Rahmen der Erfindung wird unter dem Begriff "bodennaher Bereich" der Bereich verstanden, in dem der Abstand zwischen der Entleerungskante bzw. dem gekippten Behälter und der Abgabestelle gering bzw. niedrig ist, sodass eine schonende Abgabe des Tabakguts ohne Staubentwicklung aus dem Behälter an einen Schüttkegel oder eine leere Abgabefläche der Abgabestelle ausgeführt wird, wodurch eine hohe Fallhöhe des Tabakguts vermieden wird.

Eine zuverlässige Entleerung des Behälters wird erreicht, wenn der Behälter um mehr als 90° gedreht wird, sodass die offene Seite des Behälters nach unten weist oder geneigt ist. Hierbei ist die eine Kante, über die das Tabakgut hinweg rutscht, im oder am Bodenbereich der Abgabestelle angeordnet. Durch Neigung des Behälters rutscht der Schnitttabak aus dem Behälter sanft heraus.

In einer Weiterbildung des Verfahrens wird der Behälter während und/oder nach der Drehung bahnförmig und/oder translatorisch bewegt und dabei wird das Tabakgut abgegeben. Unter einer bahnförmigen Bewegung des Behälters wird eine Bewegung verstanden, die nichtgeradlinig, z.B. gekrümmt, ist. Hierbei kann das Bewegungsmuster nach einer vorbestimmten und bevorzugten Weise ausgebildet sein, um eine schonende Abgabe des Takakguts zu erreichen. Die mechanische Beanspruchung der Tabakteilchen wird dadurch herabgesetzt und gleichzeitig die Entwicklung von Staub bei der Entleerung des Behälters verringert bzw. vermieden.

Um die eine Behälterkante, über die die Entleerung vornehmlich oder ausschließlich erfolgt, möglichst nah an die Abgabestelle bzw. den Bodenbereich zu bringen, wird vorteilhafterweise der Behälter während seiner Bewegung wahlweise vertikal angehoben und wieder abgesenkt.

Dadurch, dass der Behälter während oder nach seiner Drehung quer zu einer vorbestimmten ortsfesten vertikalen Ebene, vorzugsweise translatorisch oder nichtgeradlinig, bewegt wird, wird beispielsweise der Behälter gleichzeitig zurück- und hochgefahren, wodurch auch der restliche Tabak im Behälter ohne freie Fallhöhe entleert wird.

Daneben ist es in einer bevorzugten Bewegungsart gewünscht, den Behälter vertikal nach oben und nach vorne, d.h. in die Richtung der offenen Behälterseite zu bewegen, um den Tabak aus dem Behälter an bzw. auf einen vorhandenen Schüttkegel mit Tabakgut an der Abgabestelle zu legen. Die vorbestimmte vertikale Ebene stellt eine virtuelle, d.h. gedachte, Referenzebene dar, um in Bezug auf diese ortsfeste Ebene die Bewegung des Behälters verfolgen und beschreiben zu können.

Gemäß einer vorteilhaften Ausgestaltung des Verfahrens ist vorgesehen, dass die Drehachse und/oder die Schwerpunktsachse des Behälters quer zur vorbestimmten ortsfesten vertikalen Ebene bewegt werden. Beispielsweise ist eine vorbestimmte ortsfeste vertikale Ebene mittels der vertikalen Ebene durch die Schwerpunktsachse oder die Drehachse des Behälters vor dem Zeitpunkt der Drehung des Behälters bzw. vor Entleerung des Behälters oder mittels einer vertikalen Ebene durch die Drehachse / Schwerpunktsachse zu einem vorbestimmten Zeitpunkt gegeben.

Wenn vorteilhafterweise der Behälter im Wesentlichen um 180° gedreht wird, ist es möglich, dass das Tabakgut als kompakte Einheit auf die Abgabestelle gelangt. Hierbei wird das Tabakgut sanft auf die Abgabestelle abgelegt.

Außerdem wird eine schonende Behandlung des Tabakguts realisiert, wenn der Behälter nach oder während seiner im Wesentlichen um 180° erfolgenden Drehung nach oben bewegt wird.

Ferner ist es von Vorteil, wenn nach Entleerung des Behälters der Behälter gedreht, insbesondere zurückgedreht, wird, sodass die offene Seite des Behälters nach oben weist.

Außerdem ist es günstig, wenn der Behälter nach seiner Entleerung in eine Abgabeposition bewegt wird.

Dazu wird vorgeschlagen, dass der Behälter mittels eines Roboters, insbesondere Knickarmroboters oder Portalroboters, bewegt und/oder gedreht wird. Insbesondere mit einem Knickarmroboter lassen sich zuverlässig auf besonders vorteilhafte Weise die Drehung und die, insbesondere translatorischen oder nichttranslatorischen, Bewegungen der Behälter ausführen.

Des Weiteren ist es von Vorteil, wenn die Drehung und translatorische Bewegung des Behälters in Abhängigkeit der Menge und/oder der Topologie von an der Abgabestelle vorhandenem Tabakgut gesteuert oder geregelt wird, sodass beispielsweise neues Tabakgut aus dem Behälter an einen vorhandenen Schüttkegel mit Tabakgut aufgefüllt wird.

Vorzugsweise wird das Tabakgut in einen Tabakzwischenspeicher, insbesondere Tabakbox, oder in eine Tabakbeschickungseinrichtung, entleert. Über die Beschickungseinrichtung werden weiterverarbeitende Maschinen der Tabak verarbeitenden Industrie, insbesondere Zigarettenherstellungsmaschinen bzw. Zigarettenstrangmaschinen, mit Tabak bzw. Schnitttabak versorgt.

Eine weitere Lösung der Aufgabe erfolgt durch die Verwendung eines Roboters, insbesondere Knickarmroboters oder Portalroboters, zur Entleerung von einseitig offenen bzw. von einseitig geöffneten, mit losem Tabakgut befüllten Behältern, mittels dem das voranstehend beschriebene Verfahren zur Entleerung der Behälter ausgeführt wird. Zur Vermeidung von Wiederholungen wird auf die obigen Ausführungen ausdrücklich verwiesen.

Die Erfindung wird nachfolgend anhand von Ausführungsbeispielen in den Zeichnungen exemplarisch und ohne Beschränkung des allgemeinen Erfindungsgedankens beschrieben, wobei für alle im Text nicht näher erläuterten erfindungsgemäßen Einzelheiten ausdrücklich auf die Zeichnungen verwiesen wird. Es zeigen:
- Fig. 1 a, 1 b: in mehreren Verfahrensschritten die Entleerung eines mit Schnitttabak gefüllten Behälters, wobei der Schnitttabak an einen Schüttkegel entleert wird;
- Fig. 2a, 2b: mehrere Verfahrensschritte zur Entleerung eines mit Schnitttabak gefüllten Behälters und
- Fig. 3a, 3b: Verfahrensschritte zur Entleerung eines Behälters gemäß einem weiteren Ausführungsbeispiel.

In den folgenden Figuren sind jeweils gleiche oder gleichartige Elemente bzw. entsprechende Teile mit denselben Bezugsziffern bezeichnet, sodass von einer entsprechenden erneuten Vorstellung abgesehen wird.

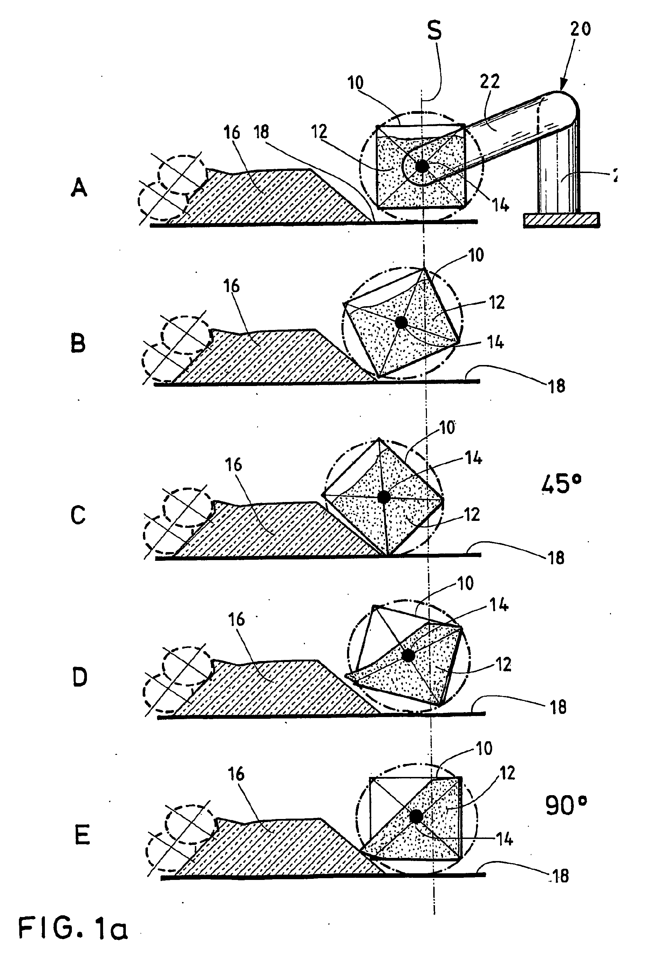

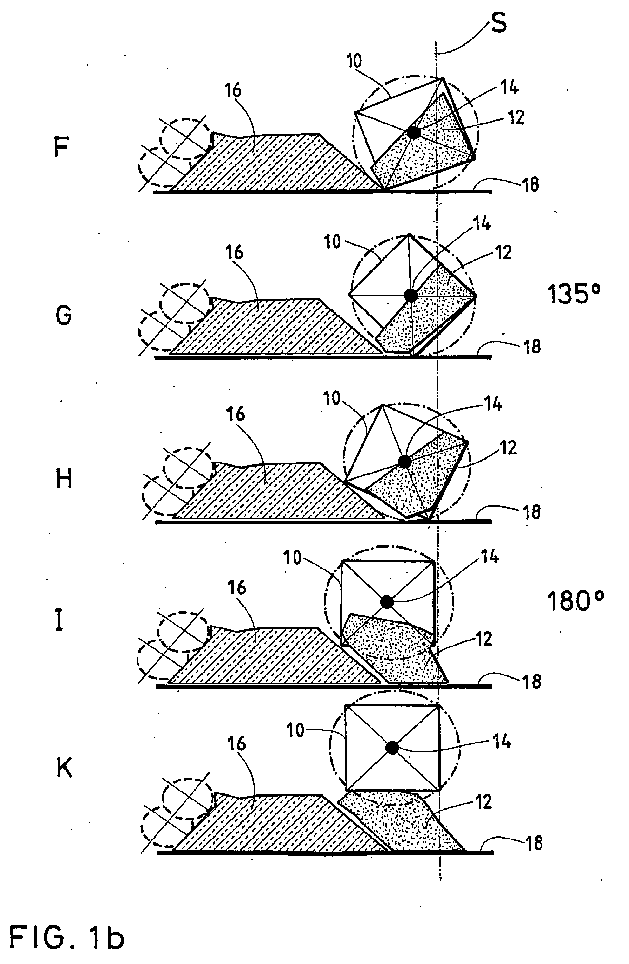

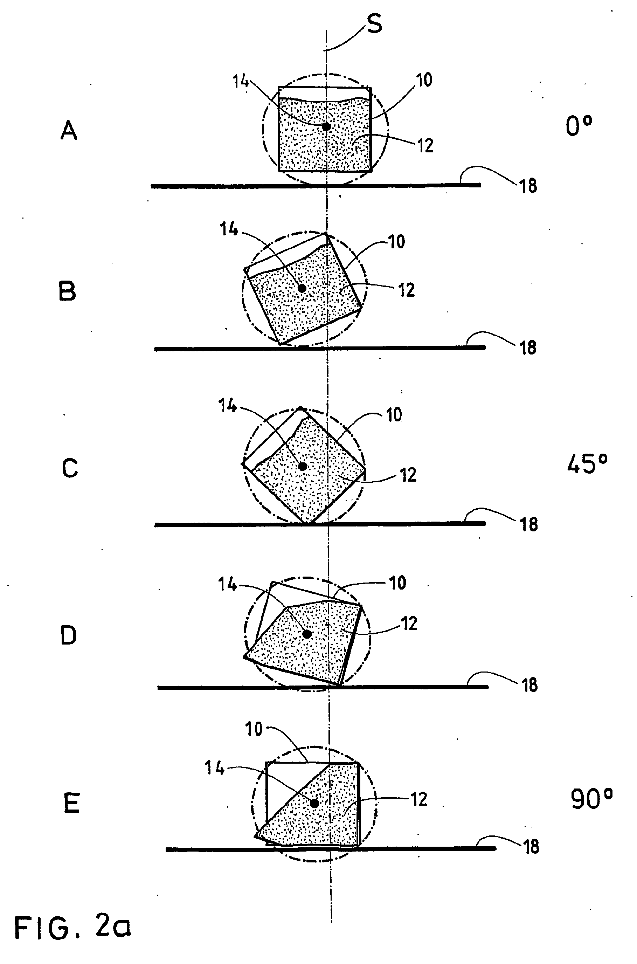

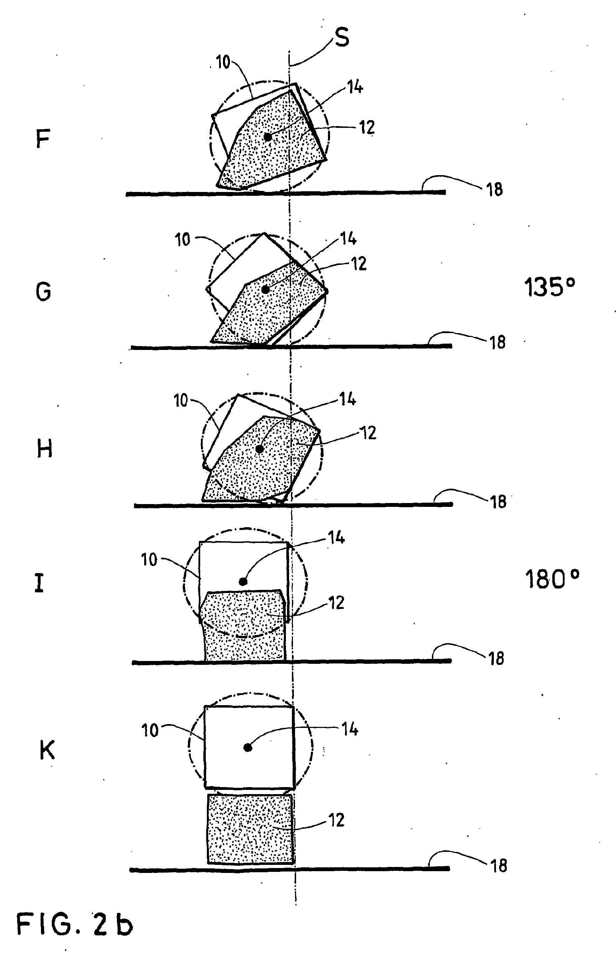

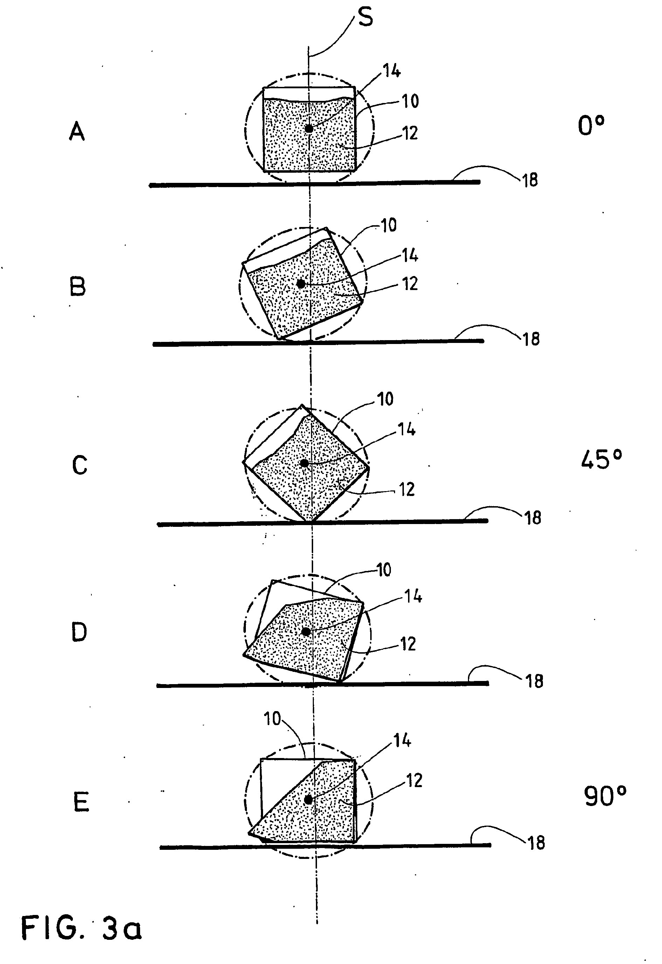

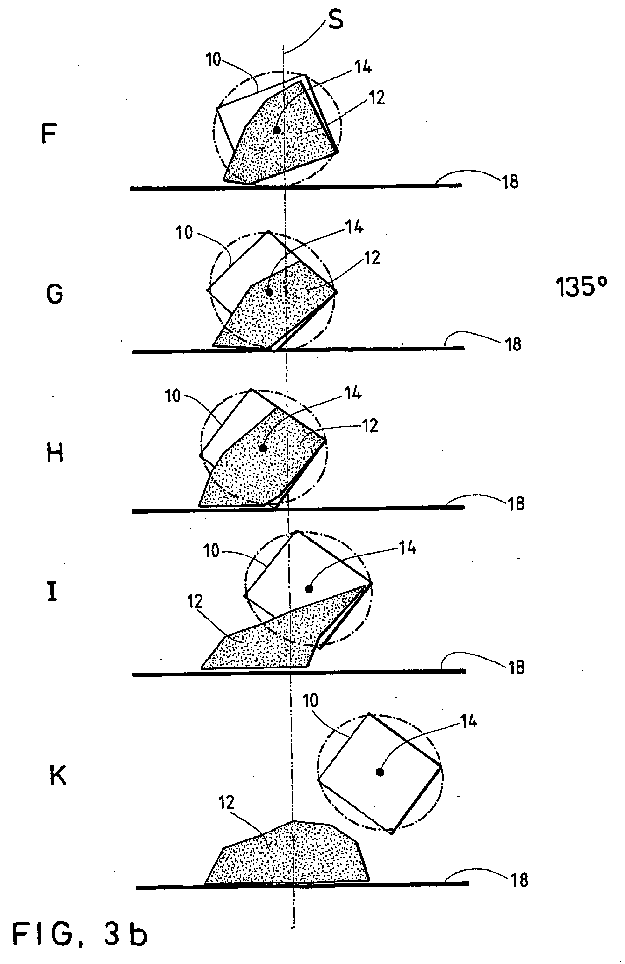

In den Figuren 1a und 1b und den anderen Zeichnungen Fig. 2a, 2b sowie Fig. 3a, 3b sind die Verfahrensschritte A bis K als zeitliche Abfolge für die Entleerung eines Behälters 10 dargestellt.

Der Behälter 10 ist mit einer Menge an Schnitttabak 12 befüllt (Verfahrenschritt A). Zur Handhabung des Behälters 10 ist ein Roboter 20 (Fig. 1 a), der eine Drehsäule 21 und einen Tragarm 22 aufweist, vorgesehen. Vorzugsweise verfügt der Roboter 20 über eine Greifeinrichtung am Tragarm 22, sodass der Roboter 20 den Behälter 10 erfasst und dreht.

Vorzugsweise ist eine Mittelachse des Behälters 10 als Schwerpunktsachse und Drehachse des Behälters 10 ausgebildet. Die Schwerpunkts- bzw. Drehpunktachse verläuft senkrecht zur Zeichenebene und ist mit dem Bezugszeichen 14 versehen.

Aus Gründen der besseren Darstellbarkeit wurde von einer Einzeichnung des Roboters 20 in den nachfolgenden Verfahrensschritten B bis K sowie in den Zeichnungen 2a, 2b sowie Figuren 3a, 3b abgesehen.

Im Ausführungsbeispiel in Fig. 1a, 1b wird der Schnitttabak 12 aus den Behältern 10 geleert, wobei der Schnitttabak 12 an einem bereits mit Schnitttabak ausgebildeten Schüttkegel 16 seitlich angeschüttet wird.

Im Verfahrensschritt A (Fig. 1 a) ist der Behälter 10 oberhalb der Ablagefläche 18 angeordnet, wobei die offene Seite des Behälters 10 nach oben weist. In den Zeichnungen ist weiterhin eine vertikale (imaginäre bzw. virtuelle) Ebene S zur Ablagefläche 18 eingezeichnet, die jeweils im Verfahrensschritt A durch die Drehachse 14 bzw. Schwerpunktsachse des Behälters 10 verläuft. Diese Ebene ist mit dem Bezugszeichen S bezeichnet und wird als ortsfeste Bezugsebene für die Bewegung bzw. Drehung des Behälters 10 verwendet. Ausgehend von der Startposition des Behälters 10 im Verfahrensschritt A wird der Behälter 10 gedreht, wobei gleichzeitig der Behälter 10 während der Drehung eine translatorische Bewegung in Bezug auf die Ebene S ausführt. Im Verfahrensschritt C ist der Behälter 10 um 45° gedreht, im Verfahrensschritt E ist der Behälter 10 um 90° gedreht, sodass die offene Seite des Behälters 10 dem Schüttkegel 16 zugewandt ist.

Durch die allmähliche Drehung des Behälters 10 fängt der Schnitttabak 12 im Verfahrensschritt D an, aus dem Behälter 10 zu rutschen. Infolge der bodennahen Anordnung der Behälterkante, über die der Schnitttabak 12 hinwegrutscht, gleitet der Schnitttabak 12 sanft an die geneigte Flanke des Schüttkegels 16.

Unter weiterer Drehung des Behälters 10 (Verfahrensschritte F, G, H (Fig. 1b)) wird der Schnitttabak 12 aus dem Behälter 10 schonend an die Ablagestelle neben dem Schüttkegel 16 geführt, wobei der Schnitttabak 12 sanft an die geneigte Flanke des Schüttkegels 16 angelegt wird. Dies ist in den Verfahrensschritten I, K gezeigt. Beim Übergang vom Verfahrensschritt H zum Verfahrensschritt I wird der Behälter 10 einerseits gedreht und andererseits gemäß einer nichtgeradlinigen Bahn bewegt. In diesem Fall wird der Behälter 10 angehoben und in Bezug auf die Ebene S wegbewegt.

Während der Ablage des Schnitttabaks 12 an den Schüttkegel 16 ändert sich fortlaufend der Abstand zwischen der Drehachse 14 und der Ablagefäche 18 und gleichzeitig der Abstand zwischen der Drehachse 14 und der vertikalen Ebene S, wodurch eine freie Bewegung des Behälters 10 unter kontinuierlicher Drehung des Behälters 10 zum seine Drehachse 14 entsteht.

Nach einer Drehung um 180° (Verfahrensschritt I) wird der Behälter 10 vertikal angehoben und von der Stelle des angeschütteten Schüttkegels 16 wegbewegt.

Durch die translatorische bzw. nichtgeradlinige (oder gekrümmte) und die rotatorische Bewegung des Behälters 10 wird eine schonende Entleerung des Tabaks aus dem Behälter 10 erreicht. Darüber hinaus entsteht kein oder nur geringfügig Tabakstaub, da wenig Luft verdrängt oder aufgewirbelt wird.

In den Figuren 2a, 2b sind die Verfahrensschritte zur Entleerung des Behälters 10 gemäß einer weiteren erfindungsgemäßen Ausgestaltung dargestellt, wobei der im Behälter 10 angeordnete Schnitttabak 12 nach Art eines Quaders auf der Ablagefläche 18 schonend (Verfahrensschritt K) abgelegt wird.

Ausgehend von der Startposition (Verfahrensschritt A) wird der Behälter 10 unter einer Drehbewegung und Linearbewegung in eine Entleerungsposition gebracht. Im Verfahrensschritt E ist der Behälter 10 um 90° gedreht, sodass allmählich Schnitttabak 12 sanft aus dem Behälter 10 auf die Ablagefläche 18 gleitet. Unter fortlaufender Rotation gelangt immer mehr Schnitttabak 12 aus dem Behälter 10 (Verfahrensschritte F bis H (Fig. 2b)).

Im Verfahrensschritt H (Fig. 2b) liegt eine Kante des Behälters 10 fast auf der Ablagefläche 18 auf, sodass unter weiterer Drehung und einer linearen Bewegung des Behälters 10 dieser vom Ausgangspunkt im Verfahrensschritt A (vgl. Fig. 2a) um 180° gedreht und dabei quasi über den auf der Ablagefläche 18 abgelegten Schnitttabak gestülpt ist. Der Behälter 10 wird an der bzw. in Bezug auf die am Bodenbereich der Ablagefläche 18 angeordnete Behälterkante gedreht.

Der Übergang vom Verfahrensschritt H zum Verfahrensschritt I wird vorzugsweise mit einer höheren Geschwindigkeit ausgeführt, da durch die schnelle Bewegung des Behälters 10 wenig oder kein Tabak aus dem Behälter 10 gelangt.

Nach der Umstülpung des Behälters 10 wird der Behälter vertikal angehoben, sodass der Schnitttabak 12 auf der Ablagefläche 18 nach Art eines Quaders abgelegt ist. Im Verfahrensschritt K (Fig. 2b) ist gezeigt, dass der umgestülpte Behälter 10 über dem quaderförmigen Schnitttabak 12 gebracht ist. Anschließend wird der Behälter 10 wieder umgedreht und in eine entsprechende Abgabeposition für den Behälter 10 gefahren.

Die in den Figuren 3a, 3b gezeigten Verfahrensschritte A bis H entsprechen den in Fig. 2a, 2b gezeigten Verfahrensschritten A bis H. Nach der Positionierung des Behälters 10 im Verfahrensschritt H wird der Behälter 10 nicht mehr weiter gedreht.

Zur Entleerung des Behälters 10 wird der Behälter 10 linear schräg nach oben und entgegen der bisherigen waagerechten (nach links gerichteten) Bewegungskomponente nach rechts bewegt. Hierdurch wird der Behälter 10 unter Beibehaltung des Drehwinkels weggezogen, sodass der noch vorhandene Schnitttabak 12 sanft aus dem Behälter gleitet und der entleerte Schnitttabak 12 auf der Ablagefläche 18 verbleibt.

Auch gemäß diesem Ausführungsbeispiel wird die relative Lage des Behälters 10 nach Erreichen einer Entleerungsposition bzw. nach Drehung des Behälters 10 in Bezug auf die Ablagefläche 18 und die vertikale Ebene S geändert. Insbesondere ändern sich die Abstände zu der vertikalen und der horizontalen Ebene.

Selbstverständlich sind im Rahmen der Erfindung weitere Bewegungsmodi des Behälters vorstellbar, wobei gemäß der Erfindung vorgesehen ist, dass der Tabak bei seiner Entleerung aus dem Behälter keine oder nur eine geringe Fallhöhe aufweist. Durch die Drehung des Behälters wird die Entleerungskante des Behälters in die Nähe der Stelle, an der der Schnitttabak abgelegt werden soll, gebracht, wobei durch die Unterstützung von translatorischen sowie nichtgeradlinigen Bewegungen des Behälters bevorzugte Ablagearten ausgeführt werden.

### Bezugszeichenliste

- 10: Behälter
- 12: Schnitttabak
- 14: Drehachse
- 16: Schüttkegel
- 18: Ablagefläche
- 20: Roboter
- 21: Drehsäule
- 22: Tragarm
- A, B, ..., I, K: Verfahrensschritte
- S: Ebene

## Patentansprüche

1. Verfahren zum Entleeren von einseitig offenen, mit losem Tabakgut (12) befüllten Behältern (10), wobei der Behälter (10) in einer ersten Position gegriffen und in eine Entleerungsposition über eine Abgabestelle, an der die offene Seite des Behälters (10) im Wesentlichen nach oben weist, gebracht und anschließend der Behälter (10) um eine Mittelachse (14) gedreht wird, sodass wenigstens eine Kante der offenen Seite bodennah in einem Übergabebereich der Abgabestelle gebracht wird, wobei der Behälter (10) während oder nach seiner Drehung um die Mittelachse (14) quer zu einer vorbestimmten, ortsfesten vertikalen Ebene (S) bewegt wird und der Behälter (10) nach seiner Drehung um mehr als 90°, insbesondere mehr als 110°, angehoben und quer zur vorbestimmten, ortsfesten vertikalen Ebene (S) derart bewegt wird, dass der Abstand zwischen der Drehachse (14) des Behälters (10) und der vertikalen Ebene (S) sich ändert und das lose Tabakgut (12) während oder nach der Drehung aus dem Behälter (10) herausrutscht.

2. Verfahren nach Anspruch 1, **dadurch gekennzeichnet, dass** der Behälter (10) während und/oder nach der Drehung bahnförmig oder translatorisch bewegt wird und dabei das Tabakgut (12) abgegeben wird.

3. Verfahren nach Anspruch 1 oder 2, **dadurch gekennzeichnet, dass** der Behälter (10) während seiner Drehung wahlweise vertikal angehoben und wieder abgesenkt wird.

4. Verfahren nach einem der Ansprüche 1 bis 3, **dadurch gekennzeichnet, dass** die Drehachse (14) und/oder die Schwerpunktachse (14) des Behälters (10) quer zur vorbestimmten ortsfesten vertikalen Ebene (S) bewegt werden.

5. Verfahren nach einem oder mehreren der Ansprüche 1 bis 4, **dadurch gekennzeichnet, dass** der Behälter (10) im Wesentlichen um 180° gedreht wird.

6. Verfahren nach Anspruch 5, **dadurch gekennzeichnet, dass** der Behälter (10) nach oder während seiner im Wesentlichen um 180° erfolgenden Drehung nach oben bewegt wird.

7. Verfahren nach einem oder mehreren der Ansprüche 1 bis 6, **dadurch gekennzeichnet, dass** der Behälter (10) nach der Entleerung gedreht, insbesondere zurückgedreht, wird, sodass die offene Seite des Behälters (10) nach oben weist.

8. Verfahren nach einem oder mehreren der Ansprüche 1 bis 7, **dadurch gekennzeichnet, dass** der Behälter (10) nach seiner Entleerung in eine Abgabeposition bewegt wird.

9. Verfahren nach einem oder mehreren der Ansprüche 1 bis 8, **dadurch gekennzeichnet, dass** der Behälter (10) mittels eines Roboters (20), insbesondere Knickarmroboters oder Portalroboters, bewegt und/oder gedreht wird.

10. Verfahren nach einem oder mehreren der Ansprüche 1 bis 9, **dadurch gekennzeichnet, dass** die Drehung und/oder translatorische Bewegung des Behälters (10) in Abhängigkeit der Menge und/oder der Topologie von an der Abgabestelle vorhandenem Tabakgut (16) gesteuert oder geregelt wird.

11. Verfahren nach einem oder mehreren der Ansprüche 1 bis 10, **dadurch gekennzeichnet, dass** das Tabakgut (12) in einen Tabakzwischenspeicher, insbesondere Tabakbox, oder in eine Tabakbeschickungseinrichtung entleert wird.

12. Verwendung eines Roboters (20), insbesondere Knickarmroboters oder Portalroboters, zur Entleerung von einseitig offenen, mit losem Tabakgut befüllten Behältern (10) gemäß dem Verfahren nach einem oder mehreren der Ansprüche 1 bis 11.

## Claims

1. Method for emptying containers (10) open on one side, filled with loose tobacco material (12), wherein the container (10) is gripped in a first position and brought into an emptying position via a discharge point at which the open side of the container (10) substantially faces upwards, and then the container (10) is turned on a central axis (14) so that at least one edge of the open side is brought near the ground in a delivery area of the discharge point, wherein the container (10), during or after turning on the central axis (14), is moved at right angles to a pre-determined, fixed vertical plane (S) and the container (10), after turning by more than 90°, in particular more than 110°, is raised and moved at right angles to the pre-determined, fixed vertical plane (S) such that the distance between the axis of rotation (14) of the container (10) and the vertical plane (S) changes and the loose tobacco material (12) during or after turning slips out from the container (10).

2. Method according to claim 1, **characterised in that** the container (10) is moved during and/or after turning in a trajectory or translatory manner and the tobacco material (12) is thereby discharged.

3. Method according to claim 1 or 2, **characterised in that** the container (10) is raised optionally vertically during turning and again lowered.

4. Method according to one of claims 1 to 3, **characterised in that** the axis of rotation (14) and/or the axis of gravity (14) of the container (10) are moved at right angles to the pre-determined fixed vertical plane (S).

5. Method according to one or more of claims 1 to 4, **characterised in that** the container (10) is turned substantially by 180°.

6. Method according to claim 5, **characterised in that** the container (10) is moved upwards after or during turning substantially by 180°.

7. Method according to one or more of claims 1 to 6, **characterised in that** the container (10) is turned after emptying, in particular turned back, so that the open side of the container (10) faces upwards.

8. Method according to one or more of claims 1 to 7, **characterised in that** the container (10) is moved into a discharge position after emptying.

9. Method according to one or more of claims 1 to 8, **characterised in that** the container (10) is moved and/or turned by means of a robot (20), in particular an articulated arm robot or gantry robot.

10. Method according to one or more of claims 1 to 9, **characterised in that** the turning and/or translatory movement of the container (10) is controlled or regulated as a function of the quantity and/or topology of tobacco material (16) present at the discharge point.

11. Method according to one or more of claims 1 to 10, **characterised in that** the tobacco material (12) is emptied into an intermediate tobacco store, in particular tobacco box, or into a tobacco feed device.

12. Use of a robot (20), in particular articulated arm robot or gantry robot, for emptying containers (10) open on one side, filled with loose tobacco material, in accordance with the method according to one or more of claims 1 to 11.

## Revendications

1. Procédé de vidage de contenants (10) ouverts sur un côté et remplis de tabac (12) en vrac, dans lequel le contenant (10) est saisi dans une première position et amené dans une position de vidage au-dessus d'un point de distribution, au niveau duquel le côté ouvert du contenant (10) est orienté sensiblement vers le haut, et le contenant (10) tourne ensuite autour d'un axe central (14) de telle façon qu'au moins un bord du côté ouvert soit amené à proximité du fond dans une zone de transfert du point de distribution, le contenant (10) étant déplacé pendant ou après sa rotation autour de l'axe central (14) transversalement à un plan (S) vertical fixe prédéterminé et le contenant (10) étant relevé, après sa rotation, de plus de 90°, en particulier plus de 110°, et déplacé transversalement au plan (S) vertical fixe prédéterminé de façon telle que la distance entre l'axe de rotation (14) du contenant (10) et le plan vertical (S) varie et que le tabac (12) en vrac glisse hors du contenant (10) pendant ou après la rotation.

2. Procédé selon la revendication 1, **caractérisé en ce que** le contenant (10) est déplacé selon une trajectoire ou en translation pendant et/ou après la rotation, moyennant quoi le tabac (12) est déchargé.

3. Procédé selon la revendication 1 ou 2, **caractérisé en ce que** le contenant (10), pendant sa rotation, est alternativement relevé verticalement et de nouveau abaissé.

4. Procédé selon l'une des revendications 1 à 3, **caractérisé en ce que** l'axe de rotation (14) et/ou l'axe de gravité (14) du contenant (10) sont déplacés transversalement au plan vertical (S) fixe prédéterminé.

5. Procédé selon l'une ou plusieurs des revendications 1 à 4, **caractérisé en ce que** le contenant (10) est amené à pivoter de sensiblement 180°.

6. Procédé selon la revendication 5, **caractérisé en ce que** le contenant (10) est déplacé vers le haut après ou pendant sa rotation de sensiblement 180°.

7. Procédé selon l'une ou plusieurs des revendications 1 à 6, **caractérisé en ce que** le contenant (10) est amené à pivoter, en particulier pivoter en sens inverse après le vidage de telle façon que le côté ouvert du contenant (10) soit orienté vers le haut.

8. Procédé selon l'une ou plusieurs des revendications 1 à 7, **caractérisé en ce que** le contenant (10) est déplacé dans une position de distribution après son vidage.

9. Procédé selon l'une ou plusieurs des revendications 1 à 8, **caractérisé en ce que** le contenant (10) est déplacé et/ou amené à pivoter au moyen d'un robot (20), en particulier un robot à bras articulé ou un robot à portique.

10. Procédé selon l'une ou plusieurs des revendications 1 à 9, **caractérisé en ce que** la rotation et/ou le mouvement de translation du contenant (10) est commandé ou régulé en fonction de la quantité et/ou de la topologie du tabac (16) présent au point de distribution.

11. Procédé selon l'une ou plusieurs des revendications 1 à 10, **caractérisé en ce que** le tabac (12) est vidé dans un réservoir intermédiaire à tabac, en particulier une boîte à tabac, ou dans un dispositif de chargement de tabac.

12. Utilisation d'un robot (20), en particulier un robot à bras articulé ou un robot à portique, pour vider des contenants (10) ouverts sur un côté et remplis de tabac en vrac au moyen du procédé selon l'une ou plusieurs des revendications 1 à 11.
